# EUROPEAN PATENT APPLICATION

(11) **EP 4 814 207 A1**
(43) Date of publication of application: **30.09.2026**
(21) Application number: 25216135.1
(22) Date of filing: 17.11.2025
(51) Int. Cl.: E02F 9/08, B60H 1/00, E02F 3/32

(54) **WORKING VEHICLE**

(30) Priority: 27.03.2025 JP 2025054170
(71) Applicant: Takeuchi Mfg. Co., Ltd., Nagano 389-0605 (JP)
(72) Inventor: SHIOIRI, Yuichi, Nagano, 389-0605 (JP); TANAKA, Keisuke, Nagano, 389-0605 (JP); KITA, Keigo, Nagano, 389-0605 (JP)
(74) Representative: Winter, Brandl - Partnerschaft mbB

(57) **Abstract**

There is provided a working vehicle in which a heater device and a heater pipe can be installed in a cabin even if the vehicle has a particularly small vehicle body. A working vehicle (1) according to the present invention includes a working device (12, 14) operating with hydraulic oil with a predetermined pressure, and a cabin (16) provided with a seat (19) on which an operator sits. The working vehicle (1) has one or a plurality of floor frames (30) supporting the cabin (16), and a heater device (60) supplying warm air to inside the cabin (16). And of the one or a plurality of floor frames (30), a predetermined first floor frame (30A) is formed in a tubular shape and configured to be also used as a heater pipe for letting the warm air flow.

## Description

### Technical Field

The present invention relates to a working vehicle.

### Background Art

As an example of a working vehicle, a hydraulic excavator, a track loader or the like having a lower body with a traveling crawler or tire installed thereon, an upper body arranged above the lower body, and a working device installed at the lower body or the upper body and operating hydraulically (that is, with hydraulic oil having a predetermined pressure) is known according to the related art.

Recently, a working vehicle having an electric motor instead of a traditional engine as a drive source of a working device has been developed (refer to JP-A-2023-23324).

### Summary of Invention

### Technical Problem

Normally, as the working vehicle becomes smaller, the space where a device is installed becomes narrower. Therefore, the configuration and arrangement of the device and the securing of an installation space therefor are persistent problems.

In the presence of such problems, particularly in a working vehicle having a configuration with a closed-type cabin, a heater device for heating the inside of the cabin and defrosting the window glass thereof needs to be installed. However, since the cabin has a structure in which a seat occupies a large space and in which operation devices or the like are densely arranged, the configuration and arrangement of the heater device and a heater pipe and the securing of an installation space therefor are significant problems.

### Solution to Problem

The present invention has been accomplished under the above-described circumstances and an object thereof is to provide a working vehicle in which a heater device and a heater pipe can be installed in a cabin even if the working vehicle is particularly small.

The present invention solves the above-described problems by a solution as described below as an embodiment.

A working vehicle according to an embodiment is a working vehicle including a working device operating with hydraulic oil with a predetermined pressure, and a cabin provided with a seat on which an operator sits, and the working vehicle includes one or a plurality of floor frames supporting the cabin, and a heater device supplying warm air to inside the cabin, and of the floor frames, a predetermined first floor frame is formed in a tubular shape and configured to be also used as a heater pipe for letting the warm air flow.

### Advantageous Effects of Invention

In the working vehicle according to the embodiment, the heater device and the heater pipe can be installed in the cabin even if the working vehicle is particularly small.

### Brief Description of Drawings

Fig. 1 is a perspective view showing an example of a working vehicle according to an embodiment of the present invention.
Fig. 2 is a perspective view showing an example of a cabin of the working vehicle shown in Fig. 1.
Fig. 3 is a perspective view showing an example of the cabin of the working vehicle shown in Fig. 1.
Fig. 4A is a perspective view showing an example of a floor frame of the working vehicle shown in Fig. 1, and Fig. 4B is a cross-sectional view taken along a line A-A in Fig. 4A.
Fig. 5 is a perspective view showing an example of an oil cooler and an oil cooler frame of the working vehicle shown in Fig. 1.

### Description of Embodiments

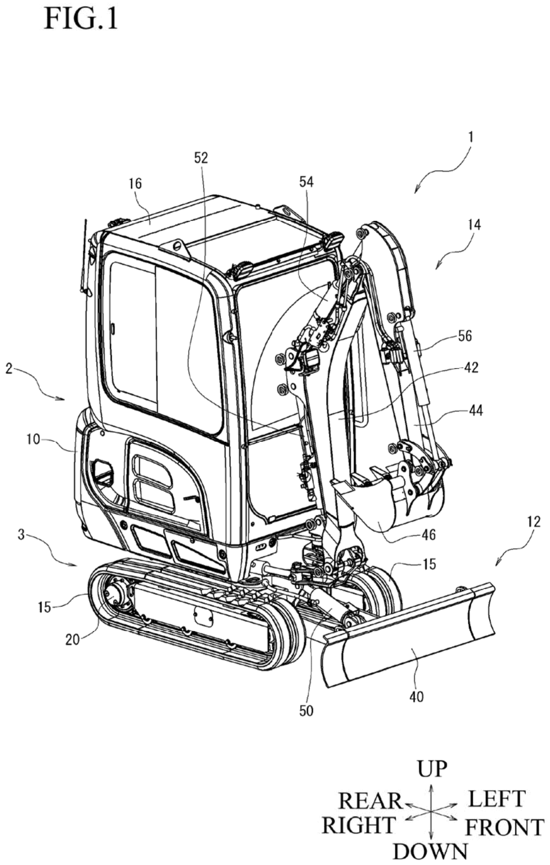

Hereinafter, an embodiment of the present invention will be described in detail with reference to the drawings. Fig. 1 is a schematic view (perspective view from above a right front part) showing an example of a working vehicle 1 according to the present embodiment. For the sake of convenience of description, there are cases where upward and downward, left and right, and forward and backward directions are indicated by arrows in the drawings. Also, there are cases where members having the same function are denoted by the same sign in all the drawings for illustrating the embodiment and the repeated description thereof is omitted.

First, the overall configuration of the working vehicle 1 will be described. A hydraulic excavator will be described as an example of the working vehicle 1. However, the working vehicle 1 is not limited to the hydraulic excavator.

As shown in Fig. 1, the working vehicle 1 has a lower body 3 provided with a traveling device, and an upper body 2 arranged above the lower body 3. This working vehicle 1 has working devices 12, 14 that operate hydraulically (with hydraulic oil having a predetermined pressure). Also, a cabin 16 provided with a seat 19 for an operator and operation devices 24, 26 or the like is provided.

As an example of the traveling device, a pair of left and right crawlers 15 are provided. However, the traveling device is not limited to the crawlers 15 and may employ a configuration having tires instead of the crawlers 15 (not illustrated). The crawlers 15 are driven by a traveling hydraulic motor 20.

As an example of the working device 12, a blade 40 is provided. The blade 40 is installed at the lower body 3 so as to be able to swing upward and downward (including forward and backward components). The blade 40 is driven by a hydraulic cylinder (blade cylinder) 50. However, the working device 12 is not limited to the above-described configuration.

As an example of the working device 14, a boom 42, an arm 44, and an attachment (in the present embodiment, a bucket) 46 are provided. However, the attachment 46 is not limited to the bucket. The boom 42 is installed at the upper body 2 so as to be able to swing upward and downward (including forward and backward components) (a boom bracket may or may not be provided in between). The arm 44 is installed at the boom 42 so as to be able to swing upward and downward (including forward and backward components). The attachment 46 is installed at the arm 44 so as to be able to swing upward and downward (including forward and backward components). The boom 42 is driven by a hydraulic cylinder (boom cylinder) 52. The arm 44 is driven by a hydraulic cylinder (arm cylinder) 54. The attachment 46 is driven by a hydraulic cylinder (bucket cylinder) 56. However, the working device 14 is not limited to the above-described configuration.

In the working vehicle 1, a drive source, a hydraulic pump, a control valve or the like (none of which is illustrated), and an oil cooler 22 are arranged inside a device compartment 10 (a part being inside the cabin 16), as a drive mechanism for driving the above-described traveling hydraulic motor 20 and hydraulic cylinders 50, 52, 54, 56. One or a plurality of hydraulic pumps are provided in accordance with the configurations of the working devices 12, 14 or the traveling device or the like, or loads or the like.

In the working vehicle 1 having the above-described configuration, the operator operates the operation devices 24, 26 or the like and thus performs control to activate the control valve to supply hydraulic oil with a predetermined pressure sent out from the hydraulic pump to the traveling hydraulic motor 20 and the hydraulic cylinders 50, 52, 54, 56. Thus, the traveling of the working vehicle 1 and the work by the working devices 12, 14 can be performed.

The working vehicle 1 has an electric motor as the above-described drive source (not illustrated). As another example of the drive source, a configuration in which an engine (internal combustion engine) is provided instead of the electric motor or along with the electric motor may be employed (not illustrated).

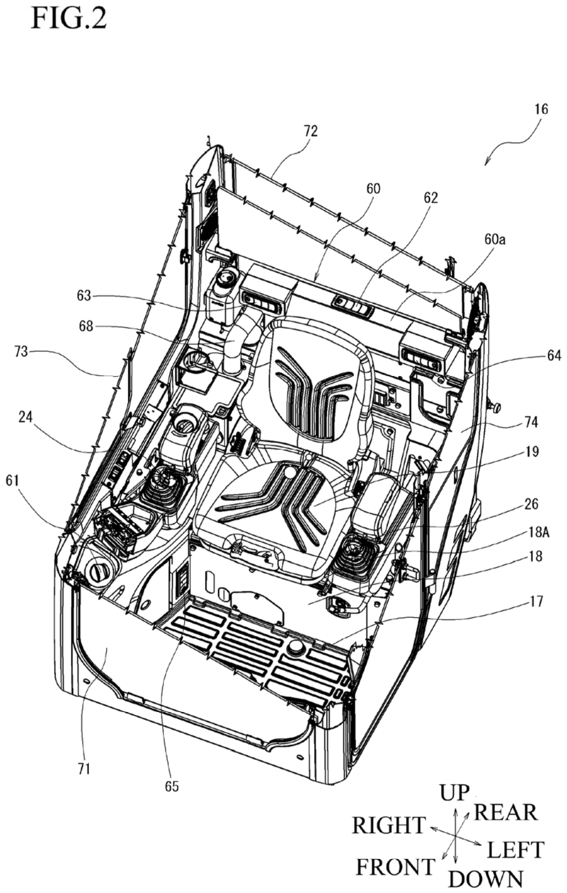

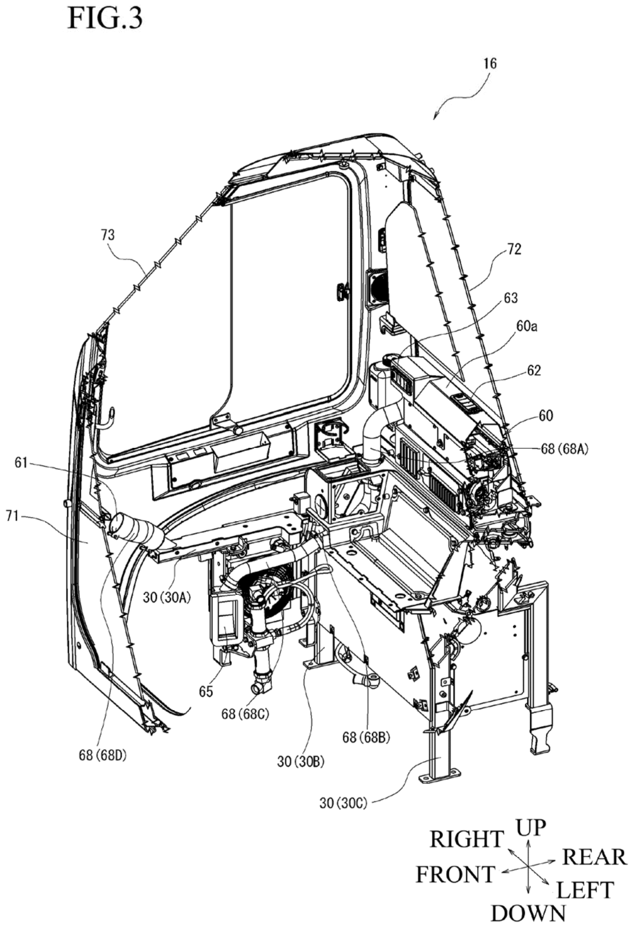

Next, the configuration of the cabin 16 will be described. The cabin 16 according to the present embodiment is a closed-type cabin. Fig. 2 is a perspective view (perspective view from above a left front part) of the inside of the cabin 16. Fig. 3 is a perspective view (perspective view from above a left front part) of the inside of the cabin 16 in a state where the seat 19, the operation devices 24, 26, edge louvers of air outlets 61, 65 (described later), and other members (a decorative panel and the like) are not displayed in order to facilitate the understanding of a characteristic configuration in the present embodiment.

The cabin 16 is supported to the upper body 2 by a floor frame 30, which is a support member. In the present embodiment, a configuration in which a plurality of floor frames 30 are coupled to each other by welding or fixing with bolts is provided. While only the illustrated floor frames are denoted by signs (30A, 30B, 30C) in Fig. 3, floor frames that are not illustrated are provided as well. As an example, the floor frame 30 is formed using a steel material such as SS400 (Japanese Industrial Standards).

The cabin 16 has the seat 19 on which the operator sits, and the various operation devices 24, 26 (major operation devices are denoted by signs) with which the operator performs operations for work and traveling or the like. As an example, the seat 19 is installed on a seat plate 18A arranged on a seat box 18 fixed to a floor plate 17.

Also, the cabin 16 has a heater device 60 that supplies warm air to inside the cabin and performs heating and defrosting of window glasses (front window glass 71, rear window glass 72, side window glasses 73, 74). The heater device 60 according to the present embodiment is arranged so as to form an inner wall (rear inner wall) of the cabin 16, at a position below the rear window glass 72 inside the cabin 16. The "position below" refers to such a position that the upper end of the heater device 60 is lower than the lower end of the rear window glass 72, but is not strictly limited to a lower position and includes an equivalent height position. Also, this position is not limited to "directly below".

As an example, the heater device 60 has a heater core (or may be a heater element) to be a heat generator and a blowing fan (neither of which is illustrated), inside a casing 60a. Thus, air is heated by the heater core and warm air is generated. Also, the generated warm air is made to blow (sent out) by the fan.

Also, the cabin 16 has an air outlet through which the warm air sent out from the heater device 60 blows out. Specifically, the air outlet 61 for performing mainly the heating of a front part inside the cabin and the defrosting of the front window glass 71 is arranged at a position near the front window glass 71 (here, a position close to the right end of the front window glass 71 (a position between the right side of the front window glass 71 and the operation device 24 in a side view)). Also, an air outlet 62 for performing mainly the heating of a rear part inside the cabin and the defrosting of the rear window glass 72 is arranged at a position near the rear window glass 72 (here, a position close to the lower end of the rear window glass 72). Also, an air outlet 63 for performing mainly the heating of a side part (right-side part) inside the cabin and the defrosting of the side (right-side) window glass 73 is arranged at a position near the side (right-side) window glass 73 (here, a position close to the rear end of the side (right-side) window glass 73). Also, an air outlet 64 for performing mainly the heating of a side part (left-side part) inside the cabin and the defrosting of the side (left-side) window glass 74 is arranged at a position near the side (left-side) window glass 74 (here, a position close to the rear end of the side (left-side) window glass 74). Also, the air outlet 65 for performing mainly the heating of a lower part (around the operator's feet) inside the cabin is arranged at a position near the seat box 18 (here, a position close to the front end of the seat box 18).

The above-described air outlets 62, 63, 64 are provided directly in the heater device 60 (casing 60a). Meanwhile, the air outlets 61, 65 are provided so as to communicate with the heater device 60 (casing 60a) via a heater pipe. As a configuration example of this heater pipe, a heater hose 68 (first heater hose 68A) connected to the casing 60a is provided. Also, a heater hose 68 (second heater hose 68B) for letting the warm air flow to the air outlet 61, and a heater hose 68 (third heater hose 68C) for letting the warm air flow to the air outlet 65, each of which is configured to branch from the heater hose 68 (first heater hose 68A), are provided. The heater hoses 68 are formed using common materials (rubber, resin, and the like).

The air outlet 65 is at a position in a lower part (around the operator's feet) inside the cabin, as described above. Therefore, particularly, even in the case where the upper body 2 is small, the area where the heater pipe is to be provided and the area where operation-related devices are densely arranged do not overlap each other (or an overlap is small), and therefore a space where the heater pipe, that is, the heater hose 68 (third heater hose 68C), is provided can be secured relatively easily. Therefore, in the present embodiment, a configuration in which the heater hose 68 (third heater hose 68C) is directly connected to the air outlet 65 can be employed.

Meanwhile, the air outlet 61 is at a position in a front part (more to the front than the operation device 24) in the cabin, as described above. Therefore, particularly in the case where the upper body 2 is small, the area where the heater pipe is to be provided and the area where operation-related devices, mainly the operation device 24 or the like, are densely arranged, overlap each other, and therefore it is extremely difficult to secure a space where the heater pipe, that is, the heater hose 68 (second heater hose 68B), is provided. Therefore, in the present embodiment, a problem arises in that a configuration in which the heater hose 68 (second heater hose 68B) is directly connected to the air outlet 61 cannot be employed. Also, even if by any chance the heater pipe can be provided in this area, the air outlet 61 is at the most distant position from the heater device 60 and therefore it is apparent that a problem arises in that the air volume at the air outlet 61 tends to decrease due to the occurrence of a pressure loss along the way.

If these problems cannot be solved, the position of the heater device 60, that is, the arrangement at the position below the rear window glass 72 inside the cabin 16, must be reconsidered. However, particularly in the case where the upper body 2 is small, there is no room left in the first place for working out another installation space inside the cabin 16 and therefore a working vehicle (particularly a small vehicle) with the heater device 60 installed therein cannot be implemented (or difficult to implement).

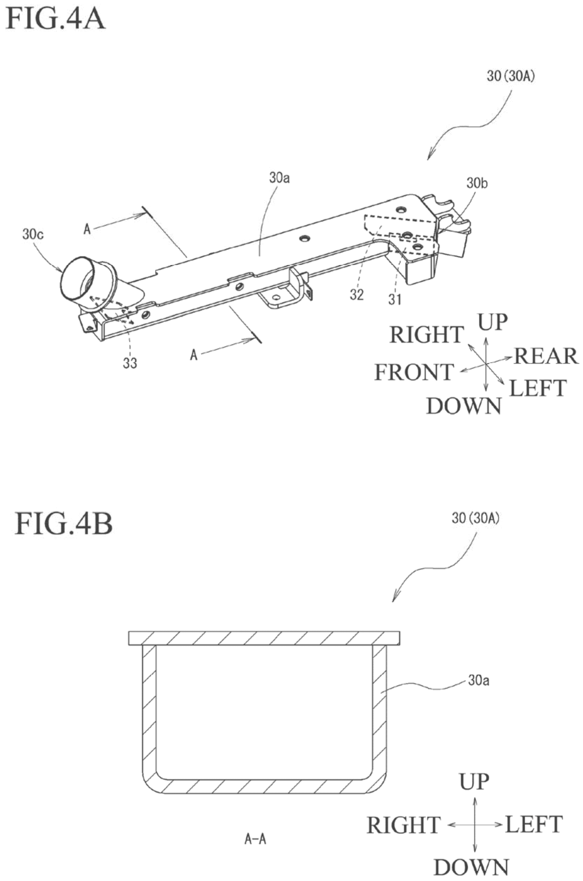

In the present embodiment, the above-described problem is solved by having the following configuration. Specifically, the floor frame 30 (hereinafter the first floor frame 30A) arranged in the forward and backward directions at the lateral side (right side) of the cabin 16 has a tubular configuration. Fig. 4A is a perspective view (perspective view from above a left front part) of the first floor frame 30A, and Fig. 4B is a cross-sectional view taken along a position A-A in Fig. 4A. The related-art floor frame is configured using a steel material having a U-shaped cross section. In contrast, the first floor frame 30A according to the present embodiment is configured to have a rectangular cross section, that is, to be tubular, for example, by welding a flat plate-shaped steel material to the opening part of a U-shaped steel material.

With the above-described configuration, the first floor frame 30A, which is a support member of the cabin 16, can also be used as the heater pipe for letting the warm air supplied from the heater device 60 flow. As a specific configuration, the first floor frame 30A is provided with a connection port 30b at one end of a tubular main body 30a, and a connection port 30c at the other end. As an example, both the connection port 30b and the connection port 30c are formed in a cylindrical shape communicating with the space inside the main body 30a. Moreover, the heater hose 68 (second heater hose 68B) communicating with the heater device 60 is connected to the connection port 30b, and the heater hose 68 (fourth heater hose 68D) communicating with the air outlet 61 is connected to the connection port 30c.

Thus, even in the case where a space for installing the heater pipe cannot be worked out from the rear part of the cabin 16, where the heater device 60 is provided, to the front part of the cabin 16, where the air outlet 61 is provided (particularly in the area where operation-related devices, mainly the operation device 24 and the like, are densely arranged), the first floor frame 30A can also be used as the heater pipe. That is, a configuration in which the warm air generated by the heater device 60 blows out from the air outlet 61 can be implemented. Also, since the cross-sectional area of the first floor frame 30A is formed to be larger than the cross-sectional area of the heater hose 68 (second heater hose 68B), a necessary air volume can be secured at the air outlet 61.

As a result, a configuration in which the heater device 60 is arranged at the position below the rear window glass 72 inside the cabin 16 can be employed. Also, with this arrangement, the following effects can be achieved as well. Specifically, the air outlet 62 directly connected (almost directly connected) to the heater device 60 can be arranged at a position below (almost directly below) the rear window glass 72, and the defrosting of this rear window glass 72 and the heating of the periphery of the seat 19 (particularly in the rear of the backrest) can be effectively performed. Particularly, since a powerful defrosting effect is achieved, the use of a glass with an embedded heat wire for the rear window glass 72 is unnecessary and accordingly an energizing device for the heat wire is unnecessary, and therefore a significant cost reduction can be achieved.

The present inventor has also examined a configuration in which the related-art U-shaped floor frame is used as it is, with a heater hose arranged therein, as a comparative example. However, it has become apparent that, in the case where this configuration is employed, a problem arises in that only a heater hose with a small diameter can be installed and therefore a necessary air volume cannot be secured at the air outlet 61. This problem, also, can be solved by employing the above-described configuration according to the present embodiment. That is, as described above, a necessary air volume can be secured at the air outlet 61.

Meanwhile, the first floor frame 30A is originally a support member of the cabin 16 and therefore does not have a shape based on the assumption of being used as a hose and has a complex shape (bent or curved part, corner part, and the like). Therefore, it has become apparent that, even if warm air is simply made to flow, a problem arises in that stagnation or turbulence occurs and generates a pressure loss and therefore the air volume sent out from the air outlet 61 connected at the end tends to be insufficient.

In the present embodiment, this problem is solved by having the following configuration. Specifically, a plate-shaped rectifying plate that rectifies the flow of warm air is provided inside the first floor frame 30A. As an example, near the connection port 30b serving an inlet, rectifying plates 31 and 32 for forming a smooth flow path from the connection port 30b to inside the main body 30a are provided. Also, near the connection port 30c serving as an outlet, a rectifying plate 33 for forming a smooth flow path from inside the main body 30a to the connection port 30c is provided. Thus, when warm air is made to flow inside the first floor frame 30A, the occurrence of stagnation or turbulence due to the shape of the bent or curved part, the corner part or the like inside the first floor frame 30A can be prevented and a smooth flow can thus be promoted. Therefore, a necessary air volume can be secured at the air outlet 61.

By the way, the first floor frame 30A is a support member of the cabin 16 as described above and therefore is formed using a steel material such as SS400 (Japanese Industrial Standards). Therefore, it has become apparent that when the first floor frame 30A is used also as a heater pipe and warm air is made to flow inside, the heat radiation effect due to thermal conduction is relatively large, posing a problem in that the temperature of the warm air tends to decrease largely.

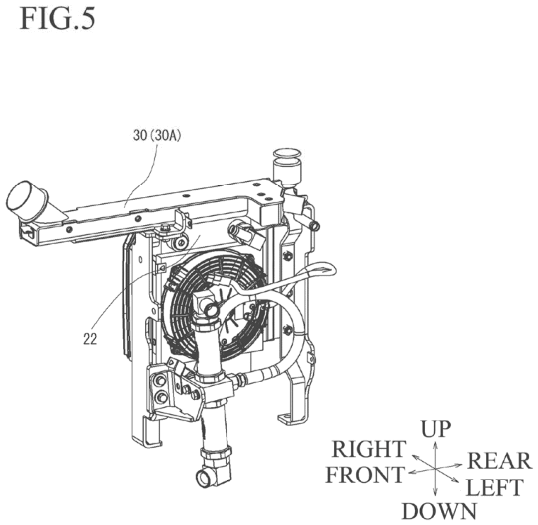

In the present embodiment, this problem is solved by having the following configuration. Specifically, the first floor frame 30A has a configuration to be used also as an oil cooler frame that forms a support member of the oil cooler 22. Particularly, the first floor frame 30A is arranged so as to support an upper part of the oil cooler 22. Fig. 5 is a perspective view (perspective view from above a left front part) of the oil cooler 22 and the oil cooler frame supporting the oil cooler 22 (the first floor frame 30A being also used for this).

With the above-described configuration, the heat generated by the oil cooler 22 can be used to heat the first floor frame 30A. Therefore, a decrease in the temperature of the warm air flowing inside the first floor frame 30A can be suppressed. Particularly, with the configuration supporting the upper part of the oil cooler 22, the heat generated by the oil cooler 22 (that is, spontaneously rising hot air) can be made to pass through the position where the first floor frame 30A is arranged (or a position nearby), and therefore the efficiency of warming can be increased further. That is, these configurations, also, serve as an element that enables the implementation of the arrangement at the rear part of the heater device 60. Also, as described above, the oil cooler frame (the first floor frame 30A being also used for this) is in a tubular shape with a rectangular cross section. Thus, in the case of producing an oil cooler frame (the first floor frame 30A being also used for this) corresponding to the rectangular oil cooler 22, an oil cooler frame with a rectangular cross section is easier to produce in terms of the shape and can be produced in a space-saving manner.

The other mechanisms for traveling and work in the working vehicle 1 according to the present embodiment are similar to those in a known working vehicle (hydraulic excavator) and therefore the detailed description thereof is omitted.

As described above, it is preferable that the present invention includes the configurations given below.
(1) A working vehicle according to an embodiment is a working vehicle including a working device operating with hydraulic oil with a predetermined pressure, and a cabin provided with a seat on which an operator sits, and the working vehicle includes one or a plurality of floor frames supporting the cabin, and a heater device supplying warm air to inside the cabin, and of the floor frames, a predetermined first floor frame is formed in a tubular shape and configured to be also used as a heater pipe for letting the warm air flow.
(2) In the working vehicle according to the above aspect (1), it is preferable that the heater device is arranged at a position below a rear window glass inside the cabin.
(3) In the working vehicle according to the above aspect (1) or (2), it is preferable that the working vehicle further includes an oil cooler that cools the hydraulic oil, and that the first floor frame is configured to be used also as an oil cooler frame supporting the oil cooler.
(4) In the working vehicle according to the above aspect (3), it is preferable that the first floor frame is arranged so as to support an upper part of the oil cooler.
(5) In the working vehicle according to any one of the above aspects (1) to (4), it is preferable that the first floor frame has therein a rectifying plate that rectifies a flow of the warm air.
(6) In the working vehicle according to the above aspect (5), it is preferable that the rectifying plate is arranged at least one of a position near an inlet and a position near an outlet of the first floor frame.
(7) In the working vehicle according to any one of the above aspects (1) to (6), it is preferable that the first floor frame has a cross section formed in a rectangular shape.

According to the present invention, since the floor frame is also used as a heater pipe, the heater pipe can be installed in the cabin even if the vehicle is particularly small. Also, a necessary air volume can be secured at the air outlet in the front part inside the cabin that communicates with the heater pipe. Since these advantageous effects are achieved, a configuration in which the heater device is installed in the rear part inside the cabin can be implemented.

The present invention is not limited to the above-described embodiment (hydraulic excavator). For example, while a hydraulic excavator has been described as an example of the working vehicle, the present invention can be similarly applied to other working vehicles (track loader or the like) having a closed-type cabin.

## Claims

1. A working vehicle (1) comprising a working device (12, 14) operating with hydraulic oil with a predetermined pressure, and a cabin (16) provided with a seat (19) on which an operator sits,
the working vehicle (1) comprising:
one or a plurality of floor frames (30) supporting the cabin (16); and
a heater device (60) supplying warm air into the cabin (16), wherein
a predetermined first floor frame (30A) of the one or a plurality of floor frames (30) is formed in a tubular shape and configured to be also used as a heater pipe for letting the warm air flow.

2. The working vehicle (1) according to claim 1, wherein
the heater device (60) is arranged below a rear window glass (72) inside the cabin (16).

3. The working vehicle (1) according to claim 1 or 2, further comprising:
an oil cooler (22) that cools the hydraulic oil, wherein
the first floor frame (30A) is configured to be also used as an oil cooler frame supporting the oil cooler (22).

4. The working vehicle (1) according to claim 3, wherein
the first floor frame (30A) is arranged so as to support an upper part of the oil cooler (22).

5. The working vehicle (1) according to any one of claims 1 to 4, wherein
the first floor frame (30A) has a rectifying plate (31, 32, 33) inside the first floor frame (30A) that rectifies a flow of the warm air.

6. The working vehicle (1) according to claim 5, wherein
the rectifying plate (31, 32, 33) is arranged at least one of a position near an inlet of the first floor frame (30A) and a position near an outlet thereof.

7. The working vehicle (1) according to any one of claims 1 to 6, wherein
the first floor frame (30A) has a rectangular frame-shaped cross section.
